# EUROPEAN PATENT APPLICATION

(11) **EP 4 810 984 A1**
(43) Date of publication of application: **23.09.2026**
(21) Application number: 25164167.6
(22) Date of filing: 17.03.2025
(51) Int. Cl.: G01S 7/03, G01S 7/35, G01S 13/34, G01S 13/42, G01S 13/58

(54) **RESOLVING A MULTIPATH AMBIGUITY IN A TDM-MIMO RADAR**

(71) Applicant: Axis AB, 223 69 Lund (SE)
(72) Inventor: Nadig, Santhosh, 223 69 LUND (SE); Mannesson, Anders, 223 69 LUND (SE); Heunisch, Sebastian, 223 69 LUND (SE)
(74) Representative: AWA Sweden AB

(57) **Abstract**

A TDM MIMO FMCW radar comprises at least one row of physical receivers with a first spacing in a first direction, and further comprises a plurality of physical transmitters arranged with a second spacing in said first direction. To determine whether a peak in an angle spectrum corresponds to a direct reflection or a first-order multipath artefact, a full-array angle spectrum (901) based on all elements of a virtual array signal, and a single-subarray angle spectrum (902) based on one subarray are computed. If a peak in the full-array angle spectrum and a corresponding baseline peak in the single-subarray angle spectrum are co-located, it is concluded that the peak represents a direct reflection in the scene. Otherwise, if the peak and the baseline peak are not co-located, it is concluded that the peak represents a first-order multipath artefact.

## Description

### TECHNICAL FIELD

The present disclosure is related to signal processing in time-division multiplexing (TDM) multiple-input multiple-output (MIMO) frequency-modulated continuous-wave (FMCW) radar equipment. In particular, it proposes a method for resolving a first-order multipath ambiguity arising in a TDM-MIMO FMCW radar.

### BACKGROUND

A radar array may consist of a single physical transmitter and a plurality of physical receivers. The effective number of elements in the physical radar array is equal to the number of physical receivers. The number of elements determines the resolution of a radar array. For example, the angular resolution in angle-of-arrival (AoA) computations improves as the number of elements in the radar array grows.

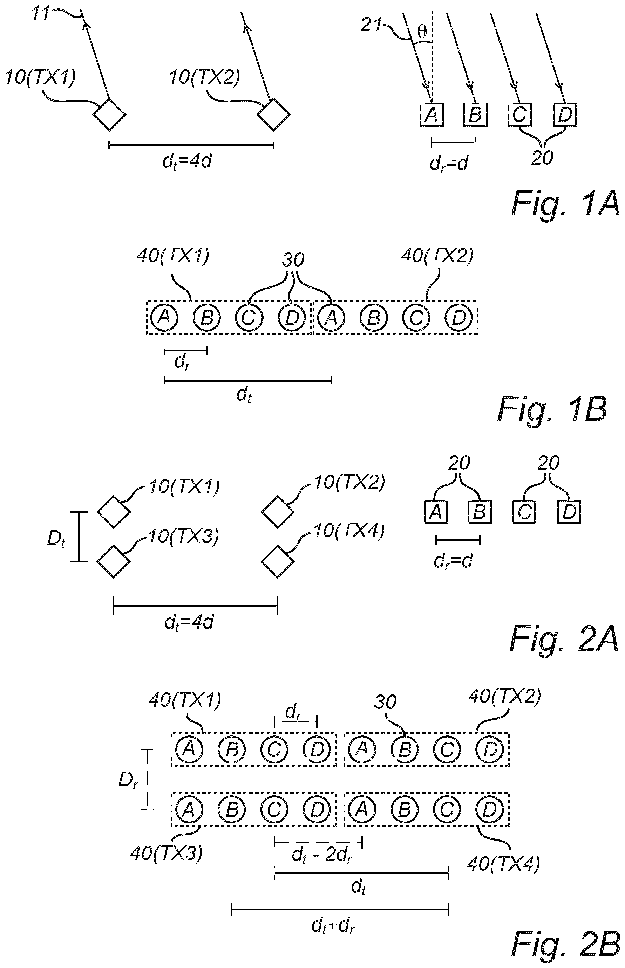

To increase the effective number of radar array elements, MIMO radar has been proposed. A MIMO radar array has multiple physical receivers as well as *M* ≥ 2 physical transmitters, and this gives rise to a virtual radar array with *MᵣM* elements, where *Mᵣ* is the number of physical receivers. Figure 1A shows an example setup with two physical transmitters 10 and four physical receivers 20. Figure 1B shows the resulting virtual array, in which two subarrays 40 of the eight virtual antenna elements 30 can be discerned and traced back to the respective physical transmitters that generated them. Within each subarray 40, further, the spatial configuration of the virtual antenna elements 30 (e.g., geometry, orientation) is identical to the spatial configuration of the physical receivers 20, as emphasized by the consistently used labels A, B, C and D.

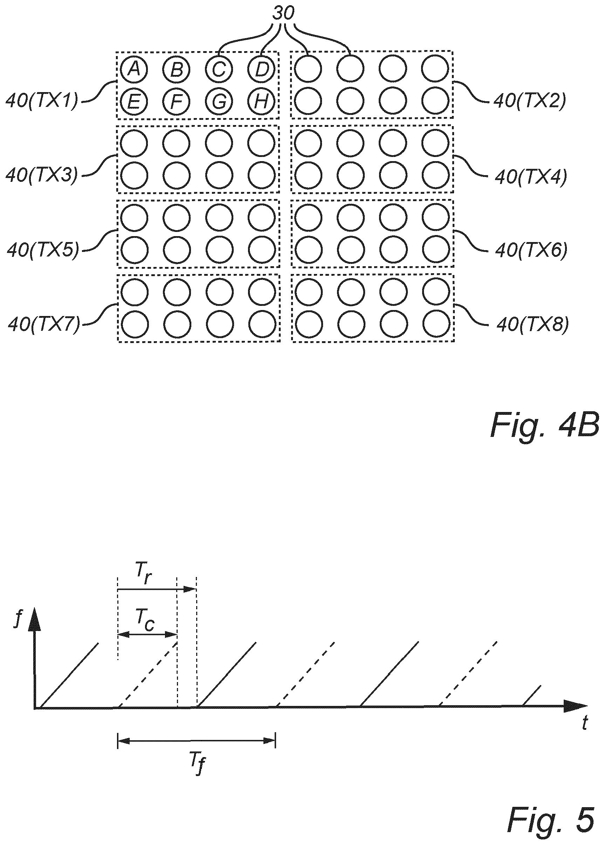

The physical transmitters in a MIMO radar may be fed in synchroneity using a multi-carrier signal, such as an orthogonal frequency-division multiplexing signal. As an alternative, to limit expenditure on antenna structures and to be able to feed all physical transmitters from a common signal synthesizer, the concept of a TDM MIMO radar has been proposed, in which the physical transmitters are used in time alternation. Figure 5 illustrates the operation of a TDM MIMO radar of the frequency-modulated continuous-wave (FMCW) type with M = 2 physical transmitters. Here, frequency is plotted against time, wherein the solid and dashed lines refer to chirps transmitted from a first and second physical transmitter, respectively. The symbol *T_{c}* denotes the chirp length, *Tᵣ* the chirp repetition time, and *T_{f} = MTᵣ* the chirp repetition period for the same transmit antenna. The frequency axis does not necessarily start at the origin. In a representative millimeter-wave radar, each chirp sweeps from 77 GHz to 81 GHz and for a duration of *T_{c}* = 40 µs.

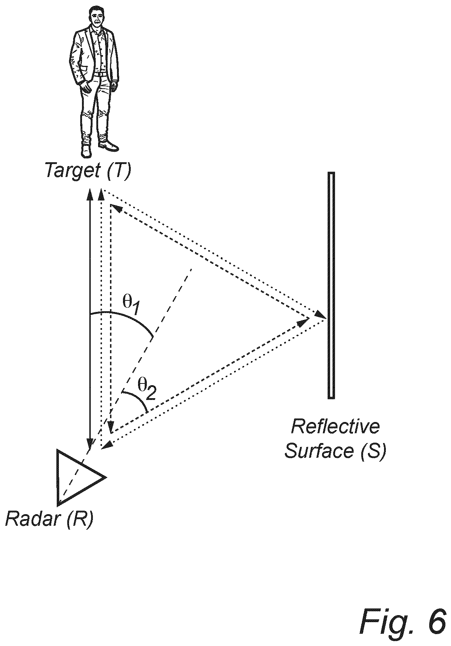

Although the MIMO FMCW radars are popular due to their ability to achieve high angular resolution with a relatively small number of transmit and receive antennas, they perform poorly in certain known circumstances. For example, a radar that monitors a moving object in a scene with many static reflective surfaces (or scatterers, such as metallic fences, parked vehicles, building walls and doors) may be receiving both the intended echo along the line of sight to the moving target (target detection) and unwanted further echoes which originate from reflections of the scatterers (multipath detections). In figure 6, the path R-T-R, drawn in solid line, corresponds to the target detection, and the dotted paths R-T-S-R and R-S-T-R correspond to a multipath detection. The echoes originating from multipath detections are undesirable from a measuring perspective but may also have negative secondary effects, such as when a recipient of the radar signal wrongly detects that a person in the scene has entered a prohibited area (but this is actually the echo of the person) and triggers a costly false alarm, or when a target-tracking algorithm gets confused by an unlikely sudden movement (which is actually the appearing of the target's echo).

In the applicant's earlier application EP23217918.4, a computationally efficient method for resolving a multipath ambiguity for a virtual array of a TDM MIMO radar was described. In the method, a test signal is formed by applying two sequential nullspace projections (dependent on the difference of the phases of the leading peaks in the angle spectrum) to the virtual array signal, and it is assessed whether the resulting test signal has any non-noise content.

Although the method according to EP23217918.4 has excellent performance and stability, it would be interesting to develop alternative approaches to ambiguity resolution. Such alternative approaches could perform even better in certain operational circumstances or they may allow less costly implementations.

### SUMMARY

One objective of the present disclosure is to make available a computationally efficient method for resolving a multipath ambiguity for a virtual array of a TDM MIMO radar. A further objective is to propose such a method which can be executed based on a virtual array signal of a range-Doppler bin and without access to additional static or dynamic information. A further objective is to propose such a method which leverages an inherent subarray structure of the virtual array. A further objective is to propose such a method that begins with a partial test which is sufficient for a preliminary conclusion on the presence of a multipath artefact, such that the remainder of the method can optionally be skipped. A further objective is to propose a multipath ambiguity resolution method with good robustness, that is, one which performs reliably across a wide range of imaging conditions. A still further objective is to make available a signal processing device and computer program that perform phase ambiguity resolution.

At least some of these objectives are achieved by the present invention as defined by the independent claims. The dependent claims relate to advantageous embodiments of the invention.

In a first aspect of the present disclosure, there is provided a method of resolving a first-order multipath ambiguity for a virtual array of a TDM MIMO FMCW radar. It is understood that the TDM MIMO FMCW radar comprises at least one row of physical receivers with a first spacing *dᵣ* in a first direction, and further comprises a plurality of physical transmitters arranged with a second spacing *dₜ* in said first direction. It is further understood that the virtual array comprises a plurality of subarrays, from which each subarray is generated by a combination of the row of physical receivers and one of the physical transmitters. The method comprises: obtaining a virtual array signal z of a range-Doppler bin relating to a scene, each element of the virtual array signal corresponding to one virtual antenna element of the virtual array; computing a full-array angle spectrum based on all elements of the virtual array signal; computing at least one single-subarray angle spectrum based on the virtual array signal restricted to one of the subarrays; and assessing whether a peak in the full-array angle spectrum is co-located with a corresponding baseline peak in a computed single-subarray angle spectrum. At this point, if the peaks and the baseline peaks are co-located, it is concluded that the peak in the full-array angle spectrum represents a direct reflection in the scene. If instead the peaks and the baseline peaks are not co-located, it is concluded that the peak in the full-array angle spectrum represents a first-order multipath artefact.

The method according to the first aspect is a simple yet accurate test which the inventors have developed based on a realization that first-order multipath artefacts will, unlike direct reflections, exhibit a phase discontinuity between consecutive subarrays of a virtual array. In this sense, the method makes use of an inherent subarray structure of the virtual array. A mathematical derivation that allows this underlying physical mechanism to be understood will be presented in the detailed description below. Moreover, a basic implementation of the method will be described that does not employ any other inputs than the virtual array signal of the range-Doppler bin under consideration.

According to the terminology of the present disclosure, each "subarray" of a virtual array of a MIMO radar is in a one-to-one relationship with the physical transmitter that provides the excitation. If two virtual array elements in the virtual array correspond to two different physical transmitters, they normally belong to different "subarrays" in this sense.

Further, although a "full-array angle spectrum" is computed based on all elements of the virtual array signal, it is noted that the virtual array signal as such may comprise fewer than all elements of an actual virtual array. This is illustrated by the example equipment shown in figure 2A, which gives rise to the virtual array with four subarrays shown in figure 2B. The method according to the first aspect may be applied to just the two upper or the two lower subarrays of the virtual array, e.g., that the single-subarray angle spectra are computed based on data from subarrays 40(TX1) and 40(TX2) separately, and the full-array angle spectrum is computed based on data from the union of subarrays 40(TX1) and 40(TX2).

A co-location test may include detecting non-noise signal content at an expected location of a corresponding peak in an angle spectrum. In different embodiments, the assessment whether the peak in the full-array angle spectrum and the baseline peak in the single-subarray angle spectrum are co-located may use the location of the peak in the full-array angle spectrum as reference (i.e., the baseline peak's expected location is deduced from the location of the peak in the full-array angle spectrum) or it may use the location of the baseline peak in the single-subarray angle spectrum as reference (i.e., the expected location of the peak in the full-array angle spectrum is deduced from the baseline peak's location in the single-subarray angle spectrum). Once the expected location is known by any of these approaches, a detection of non-noise signal content is performed; if the detection is successful, it is concluded that the peak in the full-array angle spectrum and the baseline peak in the single-subarray angle spectrum are co-located. Which option is preferable in a particular case may depend on the global or local noisiness of the virtual array signal.

A detection of non-noise signal content may be considered to have a positive outcome if the non-noise intensity exceeds a threshold. The threshold may be a preconfigured constant or a function of the noise floor of the virtual array signal. The comparison may be a direct comparison of the virtual array signal (optionally after noise removal) with the threshold, or the comparison may be a comparison of a statistic computed from the full-array angle spectrum with the threshold. The statistic may be a similarity estimator. In particular, an adaptive coherence estimator (ACE) of the virtual array's steering vector for an identified angle of a baseline peak. ACE and especially ACE-WN are computationally efficient and inherently normalized whatever the noise level of the signal.

In some embodiments, suitable heuristics are utilized for localizing the peak in the full-array angle spectrum based on the corresponding baseline peak in the single-subarray angle spectrum, after which the respective locations of the peaks are compared to assess whether the peaks are co-located. The localizing may be carried out based on a correspondence criterion, as will be exemplified below.

In some embodiments, at least two single-subarray angle spectra are computed. It is understood that each single-subarray angle spectrum is based on the virtual array signal restricted to a different one of the subarrays, such that the single-subarray angle spectra are independent. This allows a baseline peak to be identified in a first single-subarray angle spectrum while further considering a second single-subarray angle spectrum, which may improve the identification as regards reliability, accuracy and robustness.

In a further development of the method according to the first aspect, it is assessed whether *two* peaks in the full-array angle spectrum are co-located with *two* corresponding baseline peaks in the computed single-subarray angle spectrum. The assessment relating to the second peak adds certainty to a conclusion about multipath vs direct reflection. If the improved certainty afforded by the second assessment is not considered necessary, the execution of the ambiguity resolution method may stop after the first assessment. In this sense, the present further development of the method according to the first aspect includes an initial partial test which enables a preliminary conclusion with adequate reliability, such that the remainder of the method can optionally be omitted.

In a second aspect of the present disclosure, there is provided a signal processing device for a TDM MIMO FMCW radar with the characteristics stated above. The signal processing device comprises processing circuitry configured to resolve, in a virtual array signal comprising at least one range-Doppler bin, a first-order multipath ambiguity for a virtual array of the TDM MIMO FMCW radar by performing the method of the first aspect.

The signal processing device according to the second aspect generally shares the advantages of the method of the first aspect, and it can be implemented with an equal degree of technical variation.

The invention further relates to a computer program containing instructions for causing a computer, or the signal processing device in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
figure 1 shows one-dimensional arrays of physical transmitters and physical receivers and a resulting one-dimensional virtual array;
figure 2 shows a two-dimensional array of physical transmitters, a one-dimensional array of physical receivers and a resulting two-dimensional virtual array;
figure 3 shows a two-dimensional array of physical transmitters, a one-dimensional array of physical receivers and a resulting two-dimensional virtual array;
figure 4 shows two-dimensional arrays of physical transmitters and physical receivers and a resulting two-dimensional virtual array;
figure 5 is a plot of frequency versus time for two physical transmitters in TDM operation;
figure 6 illustrates target detection by direct reflection and first-order multipath detection;
figure 7 is a flowchart of a method for resolving a first-order multipath ambiguity for a virtual array of a TDM MIMO FMCW radar, according to embodiments herein, where FAAS is short for full-array angle spectrum and SSAS for single-subarray angle spectrum;
figure 8 shows a signal processing device a TDM MIMO FMCW radar directed at a scene with a moving radar target; and
figure 9 is a plot of four example angle spectra as a function of phase *ϕ*, including a full-array angle spectrum and two single-subarray angle spectra 902a, 902b corresponding to subarrays of the full array, wherein the full-array angle spectrum is illustrated by one example shape 901d in the case of direct reflections in the scene and a further example shape 901mp in the case of a first-order multipath artefact.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

### MIMO radar overview

Figure 1A shows a one-dimensional array of physical transmitters 10, configured to transmit a radio-frequency (RF) beam 11 towards a scene and a one-dimensional array of physical receivers 20 configured to receive a RF 21 beam reflected by an object (not shown) in the scene. It is appreciated that a complete radar equipment may include, in addition to the physical transmitters 10 and physical receivers 20, the functional stages mixing, analog-to-digital conversion, radio-frequency frontend processing (on the basis of the IF signal) and digital beamforming, as enumerated from the antenna end onwards. The physical transmitters 10 are used according to a configured transmission schedule, here corresponding to the repeating sequence TX1, TX2.

Relative to the main direction of transmission and receipt (main lobe), corresponding to the vertical direction on the drawing, the reflecting object is viewed under an angle θ. The angle θ corresponds to the AoA of the object. For the avoidance of doubt, the physical transmitters 10 are typically configured to transmit in all directions over a nonzero angular range, which includes the direction in the angle θ but is not limited to it. As indicated in figure 1A, further, the physical transmitters 10 are spaced by *dₜ* = 4d units, for some constant d, and the physical receivers 20 are equidistant with a spacing of *dᵣ* = d units.

With reference to the appended patent claims, it is noted that the physical transmitters 10 and the physical receivers 20 in figure 1A fulfil the requirement of having a spacing (nonzero spacing) in a common first direction, the horizontal direction in figure 1A. While the row of physical transmitters 10 and row of physical receivers 20 in figure 1A are even arranged oriented parallel to each other, this is not essential for the applicability of the ambiguity resolution method 700 to be described below. In fact, the requirement is fulfilled as soon as the physical transmitters 10 and the physical receivers 20 each have a spacing with a nonzero component in a common first direction, as would be still the case, say, if the row of physical receivers 20 was slanted upwards relative to the row of physical transmitters 10.

Figure 1B shows a one-dimensional virtual array of virtual array elements 30, which is generated when the array of physical transmitters 10 is operated in conjunction with the array of physical receivers 20. The virtual array is generated in the sense that, during one chirp repetition period *T_{f},* measurement data is read from each physical receiver 20 once for each active physical transmitter 10. (It is recalled that data from a plurality of chirp repetition periods is normally required for any velocity computation, e.g., for the providing of a Doppler FFT. In other words, data is collected from multiple chirps for each virtual array element.) The measurement data thus collected, an example of a *virtual array signal,* may be organized as a matrix *X* with dimensions equal to the dimensions of the virtual array. In the 1 × 8 case illustrated in figure 1B, the appearance of this matrix can be: $X = \left[{x}_{TX 1 , A} {x}_{TX 1 , B} {x}_{TX 1 , C} {x}_{TX 1 , D} {x}_{TX 2 , A} {x}_{TX 2 , B} {x}_{TX 2 , C} {x}_{TX 2 , D}\right] ,$ where *x*_{*TX*1,*A*} denotes measurement data read from the physical receiver 20 labeled A while it is excited by the first physical transmitter 10(TX1), *x*_{*TX*2*,A*} denotes measurement data read from the same physical receiver 20 while excited by the second physical transmitter 10(TX₂), and so forth. It may be considered that the virtual array in figure 1B is divided into two subarrays 40, which are each in a one-to-one relationship with the physical transmitter 10 that provides the excitation. Each measurement data entry in X may be, for example, a digital representation of an intermediate-frequency (IF) signal obtained by mixing the signal fed to the physical transmitter 10 with the signal received from the physical receiver 20. The digital representation may for instance be a row matrix of time samples. Further, each entry in X may be a data structure collecting measurement data from a plurality of radar chirps; for example, the measurement data entry may be represented as a matrix where the chirps correspond to rows.

Apart from the frequency folding, to be addressed below, the virtual array signal X is normally indistinguishable from a physical array signal collected by a 1 × 8 array of physical receivers excited by a single physical transmitter.

Within each subarray 40, the geometry and orientation of the array of physical receivers 20 is preserved, including their spacing *dᵣ*. This is visualized by using the same labels A, B, C, D for the physical receivers 20 and for the virtual antenna elements 30 of each subarray 40. Two virtual antenna elements 30 in different subarrays 40 which have been generated by the same physical receiver 20 will be referred to as *homologous* in the present disclosure. In the figures, two homologous virtual antenna elements 30 share the same label, e.g., A. The spacing of the subarrays 40 is equal to the spacing of the physical transmitters 10, that is, *dₜ* units in the first direction.

The effects of using a two-dimensional array of physical transmitters 10 or a two-dimensional array of physical receivers 20, or both, will be briefly discussed with reference to the examples in figures 2, 3 and 4. As will become apparent from these examples, the virtual array generated by an array of physical transmitters 10 and an array of physical receivers 20 corresponds to a convolution of these two arrays. For a general introduction to the structure and operation of MIMO radars, reference is made to S. Rao, "MIMO Radar", Application Report SWRA554A, Texas Instruments Incorporated, Dallas TX, July 2018.

In figure 2A, the array of physical transmitters 10 has two rows and two columns. The column spacing is *dₜ* = 4*d* units (first direction, horizontal on the drawing) and the row spacing is *Dₜ* units (second direction, vertical on the drawing). The array of physical receivers 20 has dimension 1 × 4, with a spacing of *dᵣ* = *d* units. While the physical transmitters 10 in figure 2A are arranged in two orthogonal directions, this orthogonality is by no means essential for the applicability of the present invention. Rather, a spacing with a nonzero component in the first or second direction, as applicable, is sufficient.

The resulting virtual array, with four subarrays 40, is shown in figure 2B, where example inter-element spacings are indicated. The spacing in the first direction of consecutive virtual antenna elements inside a subarray 40 is equal to the spacing of the physical receivers 20, *dᵣ* units. The spacing in the first direction between homologous virtual antenna elements 30 belonging to a pair of subarrays is either *dₜ* units (in the pairs TX1-TX2 and TX3-TX4) or zero (in the pairs TX1-TX3 and TX2-TX4). The spacing with respect to the second direction is not more than *dₜ* units for any pair of homologous virtual antenna elements 30. The spacing in the second direction between homologous virtual antenna elements 30 belonging to a pair of subarrays is either zero (in the pairs TX1-TX2 and TX3-TX4) or *Dₜ* units (in the pairs TX1-TX3 and TX2-TX4). The spacing between any pair of non-homologous virtual antenna elements, in the first or second direction, can be computed as linear combinations of these basic distances. For example, the distance between the second virtual antenna element B in the third subarray 40(TX3) and the third virtual antenna element C in the fourth subarray 40(TX4) is *dₜ* + *dᵣ* units. Similarly, the distance between the third virtual antenna element C in the third subarray 40(TX3) and the first virtual antenna element A in the fourth subarray 40(TX4) is *dₜ* - 2*dᵣ* units.

A virtual array signal collected using the virtual array in figure 2B may be represented as a 2 × 8 matrix with the following general appearance: $X = \left[\begin{matrix}{x}_{TX 1 , A} & {x}_{TX 1 , B} & {x}_{TX 1 , C} & {x}_{TX 1 , D} & {x}_{TX 2 , A} & {x}_{TX 2 , B} & {x}_{TX 2 , C} & {x}_{TX 2 , D} \\ {x}_{TX 3 , A} & {x}_{TX 3 , B} & {x}_{TX 3 , C} & {x}_{TX 3 , D} & {x}_{TX 4 , A} & {x}_{TX 4 , B} & {x}_{TX 4 , C} & {x}_{TX 4 , D}\end{matrix}\right] .$ Alternatively, the matrix elements may be arranged in a single row. This way, data from different chirps can correspond to different rows of the matrix.

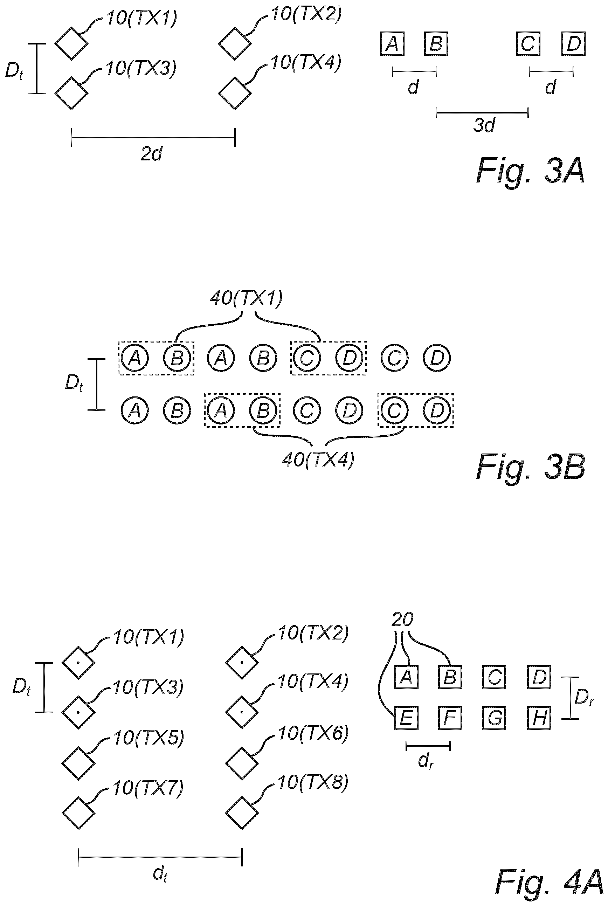

In figure 3A, the physical transmitters 10 are arranged with a different column spacing than in figure 2A, 2d units in the first direction, and the row of physical receivers 20 are spaced sequentially by d, 3*d* and d units. The resulting virtual array, as shown in figure 3B, will have the same dimension 2 × 8 as the virtual array in figure 2B, though with a different subarray structure. The first subarray 40(TX1) comprises the first, second, fifth and sixth virtual antenna elements 30 on the first row of the virtual array; and the second subarray comprises the third, fourth, seventh and eighth virtual antenna elements on the first row. The virtual antenna elements 30 on each row are equidistant, with a spacing of d.

Figure 4A, finally, shows a case where both the physical transmitters 10 and the physical receivers 20 are arranged in a two-dimensional pattern. More precisely, the physical transmitters 10 and physical receivers 20 are arranged with a nonzero spacing in the first direction (horizontal) as well as the second direction (vertical). The resulting virtual array is shown in figure 4B. Here, to avoid unnecessary repetition, only the virtual array elements 30 in the first subarray 40(TX1) have been labeled in accordance with the physical receivers 20, by letters A, B, C, ..., H. It is understood that this structure, and thus the homology relations, repeats identically in the seven further subarrays 40. The spacings *dₜ, dᵣ, Dₜ, Dᵣ* in figure 4A can be assigned any values. To make the virtual antenna elements 30 equidistant in the first direction, one may set *dₜ*/*dᵣ* = 4. Similarly, equidistant spacing in the second direction will be obtained if *Dₜ*/*Dᵣ =* 2.

### Ambiguity resolution method

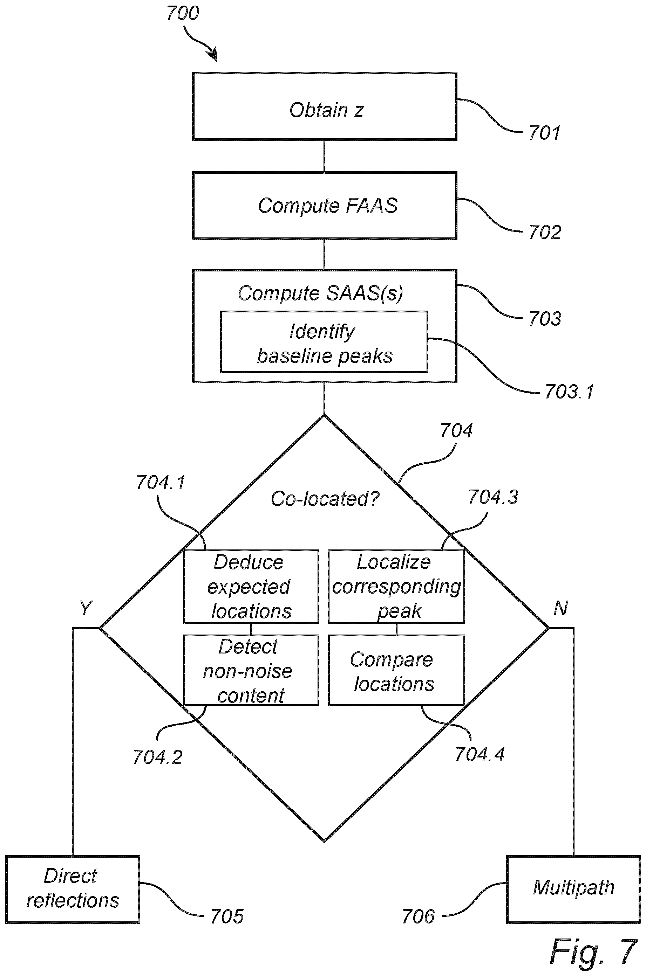

A method 700 for resolving a first-order multipath ambiguity for a virtual array of a TDM MIMO FMCW radar will now be described with reference to the flowchart in figure 7. The method 700 takes as input a virtual array signal of a range-Doppler bin, and its output includes a conclusion whether a peak in the angle spectrum represents a direct reflection or a first-order multipath artefact. As such, it is possible to execute the method 700 on a general-purpose processor with generic data input and data output capabilities. A possible application of the method 700 is in target detection or target following, and more precisely in order to identify artefacts for thereby avoiding confusing them with actual targets in the scene. Further, the artefacts may be eliminated before the data from the TDM MIMO FMCW radar are used in subsequent processing and/or before the data are presented to a user.

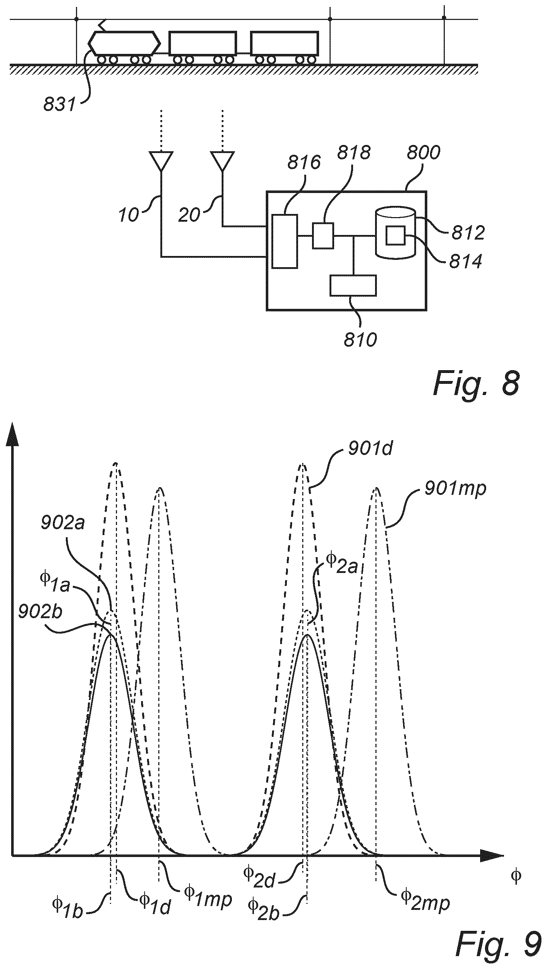

Alternatively, a signal processing device 800 of the type illustrated in figure 8 may be used. The signal processing device 800 includes processing circuitry 810 which is configured, through programming or hardcoding, to perform the method 700. The processing circuitry 810 may for example be general-purpose (programmable) circuitry with one or more processing cores, an application-specific integrated circuit (ASIC), a field-programmable gate array (FPGA) or a system-on-chip. The signal processing device 800 further comprises a memory 812 suitable for storing programs 814 executable by the processing circuitry 810. Further still, the signal processing device 800 comprises physical transmitters 10 and physical receivers 20 directed at a radar target 831, as well as a radar signal processing chain 816, 818. The radar signal processing chain 816, 818 may include the following sequence of functional stages starting from the antenna side: mixing, analog-to-digital conversion, radio-frequency frontend processing (on the basis of the IF signal) and digital beamforming. Different processing chains may integrate these stages to different degrees. Accordingly, the signal processing device performing the method 700 may be adapted for deployment as a general-purpose radar baseband processor, as a combined frontend and beamforming device, or as a dedicated digital beamforming device.

In a first step 701 of the method 700, a virtual array signal relating to a scene is obtained from a TDM MIMO radar. The virtual array signal may represent one range-Doppler bin, which is an element of a range-Doppler spectrum. The range-Doppler bin may be selected because a two-dimensional peak search suggests that it contains a moving or stationary object, especially if it may be suspected that this object could be a multipath artefact. A virtual array signal representing a range-Doppler bin has as many elements as there are there are elements in the virtual array of the TDM MIMO radar, this number being denoted *MᵣM.* Such a virtual array signal may be obtained from plurality of IF signals corresponding to a plurality of chirps and to each virtual array element of the virtual array. It is appreciated that the virtual array of the TDM MIMO radar has equidistant virtual array elements. In particular, the virtual array may be a uniform linear array (ULA).

In the present disclosure, the term *virtual array signal* is used to refer to a signal which has one value for each virtual array element of a virtual array. In the example of the virtual array depicted in figure 1A, the IF signal for the leftmost virtual array element (i.e., data collected by the first physical receiver 20 (label A) when excited by the first physical transmitter 10(TX1)) and six chirps *c0,* c1, ..., c5 may have the following schematic structure: ${x}_{TX 1 , A} = \left[\begin{matrix}{x}_{TX 1 , A}^{c 0 , t 0} & {x}_{TX 1 , A}^{c 0 , t 1} & {x}_{TX 1 , A}^{c 0 , t 2} & {x}_{TX 1 , A}^{c 0 , t 3} & {x}_{TX 1 , A}^{c 0 , t 4} & {x}_{TX 1 , A}^{c 0 , t 5} & {x}_{TX 1 , A}^{c 0 , t 6} & {x}_{TX 1 , A}^{c 0 , t 7} \\ {x}_{TX 1 , A}^{c 1 , t 0} & {x}_{TX 1 , A}^{c 1 , t 1} & ⋯ & & & & & ⋮ \\ {x}_{TX 1 , A}^{c 2 , t 0} & ⋮ & & & & & & \\ {x}_{TX 1 , A}^{c 3 , t 0} & & & & & & & \\ {x}_{TX 1 , A}^{c 4 , t 0} & & & & & & & \\ {x}_{TX 1 , A}^{c 5 , t 0} & ⋯ & & & & & & {x}_{TX 1 , A}^{c 5 , t 7}\end{matrix}\right] ,$ where *t*0*, t*1*, ..., t*7 is a discretization of the interval [0, *T_{c}*]*.* (In realistic implementations, the discretization may be finer and the computations may be based on data from a larger number of chirps.) Each row of *x*_{*TX*1,*A*} corresponds to one of the chirps, and each entry can be understood as a time sample for that chirp. Range information can be obtained by applying a discrete harmonic transform, for example DFT or FFT, to each row of the IF signal. If FFT is used, this produces the following range spectrum (a "range FFT"): ${y}_{TX 1 , A} = \left[\begin{matrix}{y}_{TX 1 , A}^{c 0 , r 0} & {y}_{TX 1 , A}^{c 0 , r 1} & {y}_{TX 1 , A}^{c 0 , r 2} & {y}_{TX 1 , A}^{c 0 , r 3} & {y}_{TX 1 , A}^{c 0 , r 4} & {y}_{TX 1 , A}^{c 0 , r 5} & {y}_{TX 1 , A}^{c 0 , r 6} & {y}_{TX 1 , A}^{c 0 , r 7} \\ {y}_{TX 1 , A}^{c 1 , r 0} & {y}_{TX 1 , A}^{c 1 , r 1} & ⋯ & & & & & ⋮ \\ {y}_{TX 1 , A}^{c 2 , r 0} & ⋮ & & & & & & \\ {y}_{TX 1 , A}^{c 3 , r 0} & & & & & & & \\ {y}_{TX 1 , A}^{c 4 , r 0} & & & & & & & \\ {y}_{TX 1 , A}^{c 5 , r 0} & ⋯ & & & & & & {y}_{TX 1 , A}^{c 5 , r 7}\end{matrix}\right]$

The row dimension of this matrix now corresponds to range, wherein *r*0*,* r*1,* ..., *r*7 may be interpreted as range bins, intervals on the radial distance to the reflecting object. The column dimension still corresponds to the six chirps, and all information in the matrix has been derived from measurement data read from the leftmost virtual array element in figure 1B. By applying a further FFT to each column of *y*_{*TX*1,}*_{A}, a* range-Doppler spectrum (or "Doppler FFT") is obtained: ${z}_{TX 1 , A} = \left[\begin{matrix}{z}_{TX 1 , A}^{v 0 , r 0} & {z}_{TX 1 , A}^{v 0 , r 1} & {z}_{TX 1 , A}^{v 0 , r 2} & {z}_{TX 1 , A}^{v 0 , r 3} & {z}_{TX 1 , A}^{v 0 , r 4} & {z}_{TX 1 , A}^{v 0 , r 5} & {z}_{TX 1 , A}^{v 0 , r 6} & {z}_{TX 1 , A}^{v 0 , r 7} \\ {z}_{TX 1 , A}^{v 1 , r 0} & {z}_{TX 1 , A}^{v 1 , r 1} & ⋯ & & & & & ⋮ \\ {z}_{TX 1 , A}^{v 2 , r 0} & ⋮ & & & & & & \\ {z}_{TX 1 , A}^{v 3 , r 0} & & & & & & & \\ {z}_{TX 1 , A}^{v 4 , r 0} & & & & & & & \\ {z}_{TX 1 , A}^{v 5 , r 0} & ⋯ & & & & & & {z}_{TX 1 , A}^{v 5 , r 7}\end{matrix}\right]$

Each entry in the matrix *z*_{*TX*1,}*_{A},* generally a complex number, may be understood as an element in a discrete representation of the range-Doppler spectrum. A superscript such as *vᵢ*, *rⱼ* shall be understood as referring to the *i*^{th} velocity (or Doppler) bin and the *j*^{th} range bin or, for short, the (*i*,*j*)^{th} range-Doppler bin. It is noted that the velocity is a signed quantity, in the sense that the range-Doppler spectrum allows movement radially towards the radar to be distinguished from movement radially away from it.

One range-Doppler bin of the virtual array signal, which forms the input to the processing in step 702 of the method 700, can be represented as the following vector: ${Z}^{\left(i, j\right)} = \left[{z}_{TX 1 , A}^{vi , rj} {z}_{TX 1 , B}^{vi , rj} {z}_{TX 1 , C}^{vi , rj} {z}_{TX 1 , D}^{vi , rj} {z}_{TX 2 , A}^{vi , rj} {z}_{TX 2 , B}^{vi , rj} {z}_{TX 2 , C}^{vi , rj} {z}_{TX 2 , D}^{vi , rj}\right] ,$ where each element is a range-Doppler bin, i.e., a matrix entry from equation (6), for a virtual antenna element 30 of the virtual array. In the continued computations to be discussed below, the virtual array signal of the range-Doppler bin will be denoted z for simplicity, where the indices (*i*, *j*) are implicit. The phase shift between the elements is given as a sum of the velocity-induced phase shift and an AoA-induced phase shift. The AoA-induced phase shift can be observed when the AoA is nonzero in the plane of the virtual antenna array, as a result of path differences between the virtual array elements. Before computing an angle spectrum, preprocessing aiming to eliminate the velocity-induced phase shift (Doppler shift compensation) may be performed, although this is not an essential element of the invention. In fact, because specialized hardware (e.g., chipsets, optionally integrated in the TDM MIMO radar equipment) for computing the range-Doppler spectrum exists, and thus there are ways of obtaining the virtual array signal of the range-Doppler bin which do not include executing the computations outlined above, step 701 of the method 700 should be considered completed as soon as the data according to equation (7) is available.

The expected content of this data may be understood by considering figure 6, which illustrates target detection and first-order multipath detection. The path R-T-R, drawn in solid line, corresponds to the target detection, i.e., a direct reflection on a physical object in the scene. In this case, the angle of departure (AoD) and angle of arrival (AoA) are identical and equal to *θ*₁. For the first-order multipath reflection, however, the receiver receives echoes from two paths of equal length, the path R-T-S-R and the path R-S-T-R, which are both drawn in dotted line styles. The first path has an AoD of *θ*₁ and an AoA of *θ*₂. Conversely, the second path has an AoD of *θ*₂ and an AoA of *θ*₁. The observation that the AoD and AoA are different for a multipath reflection is key to the method 700 proposed herein.

The theoretical content of the virtual array signal z can be expressed in terms of transmit and receive steering vectors of the physical transmitters 10 and receivers 20. These steering vectors have the following appearance: ${a}_{t} \left({ϕ}_{D}\right) = \left[1 {e}^{{jd}_{t} {ϕ}_{D}} {e}^{j 2 {d}_{t} {ϕ}_{D}} ⋯ {e}^{j \left(M-1\right) {d}_{t} {ϕ}_{D}}\right]$ ${a}_{r} \left({ϕ}_{A}\right) = \left[1 {e}^{{jd}_{r} {ϕ}_{A}} {e}^{j 2 {d}_{r} {ϕ}_{A}} ⋯ {e}^{j \left({M}_{r}-1\right) {d}_{r} {ϕ}_{A}}\right]$ where *dₜ, dᵣ* are the separations introduced above, the phases *ϕ_{D}, ϕ_{A}* are related to the AoD and AoA through the equation $\left({ϕ}_{D}, {ϕ}_{A}\right) = \left(\frac{2 π sin {θ}_{AoD}}{λ}, \frac{2 π sin {θ}_{AoA}}{λ}\right)$ and *λ* is a representative wavelength of the radar chirps. The response of the virtual array is given by the Kronecker product of the steering vectors, ***a**ₜ*(*ϕ_{D}*) ⊗ ***a**r*(*ϕ_{A}*), which can be written more explicitly as $\left[1⋅{a}_{r}\left({ϕ}_{A}\right) {e}^{{jd}_{t} {ϕ}_{D}}⋅{a}_{r}\left({ϕ}_{A}\right) … {e}^{j \left(M-1\right) {d}_{t} {ϕ}_{D}}⋅{a}_{r}\left({ϕ}_{A}\right)\right] .$

In this row matrix, each element of size *Mᵣ* × 1 represents a subarray response of one of the M subarrays.

In the specific case of a first-order multipath artefact, the AoD is different from the AoA for each path R-T-S-R and R-S-T-R, as seen in figure 6. Disregarding noise, the antenna response can then be written as: ${z}_{mp} \left({ϕ}_{1}, {ϕ}_{2}\right) = {a}_{t} \left({ϕ}_{1}\right) ⊗ {a}_{r} \left({ϕ}_{2}\right) + {a}_{t} \left({ϕ}_{2}\right) ⊗ {a}_{r} \left({ϕ}_{1}\right) ,$ where the respective phases *ϕ*₁, *ϕ*₂ are related through equation (8) to the angles *θ*₁, *θ*₂ in figure 9. The expression (10) is computed by adding one copy of (9) evaluated for the phase assignment (*ϕ_{D}, ϕ_{A}*) *=* (*ϕ*₁, *ϕ*₂) and one copy evaluated for the phase assignment (*ϕ_{D}, ϕ_{A}*) = (*ϕ*₂, *ϕ*₁). The last element (i.e., *Mᵣ*-th element) of the k-th subarray response is given by: $exp \left({jkd}_{t}{ϕ}_{1}+j\left({M}_{r}-1\right){d}_{r}{ϕ}_{2}\right) + exp \left({jkd}_{t}{ϕ}_{2}+j\left({M}_{r}-1\right){d}_{r}{ϕ}_{1}\right)$ and the first element of the (k + 1)-th subarray response is given by: $exp \left(j\left(k+1\right){d}_{t}{ϕ}_{1}\right) + exp \left(j\left(k+1\right){d}_{t}{ϕ}_{2}\right) .$

If the virtual array has *equidistant* virtual antenna elements, which it has if *dₜ* is an integer multiple of *dᵣ*, then the phase of the first term in each of (11) and (12) increments by *dᵣϕ₂* from one virtual antenna element to the subsequent one - also if the two virtual antenna elements belong to different subarrays - and the phase of the second term in each of (11) and (12) increments by *dᵣϕ*₁ from one virtual antenna element to the subsequent one. This holds in particular if *dₜ = Mᵣdᵣ.* Therefore, antenna response (10) is continuous between the k-th subarray and the (k + 1)-th subarray if $\left\{\begin{matrix}exp \left({jkd}_{t}{ϕ}_{1}+{jM}_{r}{d}_{r}{ϕ}_{2}\right) = exp \left(j\left(k+1\right){d}_{t}{ϕ}_{1}\right) \\ exp \left({jkd}_{t}{ϕ}_{2}+{jM}_{r}{d}_{r}{ϕ}_{1}\right) = exp \left(j\left(k+1\right){d}_{t}{ϕ}_{2}\right)\end{matrix}\right.$ By periodicity of the complex exponential function, this is fulfilled if and only if $\left\{\begin{matrix}{M}_{r} {d}_{r} {ϕ}_{2} = {d}_{t} {ϕ}_{1} + 2 {πn}_{1} \\ {M}_{r} {d}_{r} {ϕ}_{1} = {d}_{t} {ϕ}_{2} + 2 {πn}_{2}\end{matrix}\right. , {n}_{1} , {n}_{2} ∈ ℤ .$ Expression (13) is in turn equivalent to ${M}_{r} {d}_{r} \left({ϕ}_{2}-{ϕ}_{1}\right) = 2 {πn}_{1} , {n}_{1} ∈ ℤ ,$ if it additionally holds that *dₜ = Mᵣdᵣ.* However, because (14) is false in general, there is in general a phase discontinuity between the k-th and the (k + 1)-th subarray in the angle spectrum when a first-order multipath artefact is present.

As the inventors have realized, this discontinuity can arise in an angle spectrum which is based on multiple subarrays, but it can never arise in a single-subarray angle spectrum. In this sense, a single-subarray angle spectrum may be considered to indicate the true AoA of a radar target. As a result, a multipath artefact will manifest itself as a peak in a full-array angle spectrum which has a different location than the corresponding peak ("baseline peak") in a single-subarray angle spectrum. Conversely, if no such discontinuity exists, the peak in the full-array angle spectrum can be expected to be co-located with the baseline peak in the single-subarray angle spectrum. There is no discontinuity in an antenna response for two direct reflections: ${z}_{d} \left({ϕ}_{1}, {ϕ}_{2}\right) = {a}_{t} \left({ϕ}_{1}\right) ⊗ {a}_{r} \left({ϕ}_{1}\right) + {a}_{t} \left({ϕ}_{2}\right) ⊗ {a}_{r} \left({ϕ}_{2}\right) .$ Here, indeed, the last element of the k-th subarray response is given by: $exp \left({jkd}_{t}{ϕ}_{1}+\left({M}_{r}-1\right){d}_{r}{ϕ}_{1}\right) + exp \left({jkd}_{t}{ϕ}_{2}+\left({M}_{r}-1\right){d}_{r}{ϕ}_{2}\right)$ and the first element of the (k + 1)-th subarray response is given by: $exp \left(j\left(k+1\right){d}_{t}{ϕ}_{1}\right) + exp \left(j\left(k+1\right){d}_{t}{ϕ}_{2}\right) .$ Because the first and second terms in each of (11') and (12') respectively increment by *dᵣϕ*₁ and *dᵣϕ*₂ from one virtual antenna element to the subsequent one, and since *dₜ = Mᵣdᵣ,* the array response is always continuous in the case of two direct reflections. As a result, a peak representing a direct reflection will have the same location in the full-array angle spectrum as in the single-subarray angle spectrum.

Equation (14) may be characterized as a degeneracy condition. If equation (14) is approximately satisfied, then the expected discontinuities (or phase jumps) between consecutive subarrays will have approximately zero length, such that even a peak in the full-array angle spectrum representing a first-order multipath artefact will be co-located with the baseline peak in the single-subarray angle spectrum. The present method 700 then might not allow a reliable conclusion about the presence of multipath artefacts and/or the detection results might be contradictory. Some embodiments of the present method 700 use knowledge of the numerical value of *Mᵣdᵣ* to test whether (14) is approximately satisfied, in which case an end user may be alerted that the conclusions from the method 700 are not fully reliable or should be discarded.

In a second step 702 of the method 700, a full-array angle spectrum is computed based on the phase shifts among the radar array elements in (7), e.g., by performing an angle-FFT or AoA-FFT. Phrased more completely, step 702 includes a computation of the full-array angle spectrum of those elements of the virtual array signal which correspond to consecutive virtual antenna elements generated by physical receivers belonging to the same row and to at least two consecutive subarrays. The angle spectrum indicates an amplitude for each AoA, and this allows detection of all objects in the scene that have a distance and radial velocity that fall in said (*i,j*)-th range-Doppler bin, including multipath artefacts. Two example full-array angle spectra 901d, 901mp are shown in figure 9.

In a third step 703, at least one single-subarray angle spectrum is computed based on the virtual array signal restricted to one of the subarrays. This is to say, only data from elements of the virtual array signal that correspond to this subarray is used to compute the single-subarray angle spectrum. The computation may employ the same method as is used in step 702. Two example single-subarray angle spectra 902a, 902b are shown in figure 9.

Step 703 may optionally include identifying one or more baseline peaks (step 703.1) for which the co-location property is to be evaluated. The baseline peaks may be identified in terms of the phase values (figure 9) at which they appear. A baseline peak may be identified based on a first single-subarray angle spectrum. Referring to figure 9, the baseline peaks identified from the first single-subarray angle spectrum 902a appear at phase values *ϕ* = *ϕ*_{1*a*} and *ϕ* = *ϕ*_{2*a*}. The baseline peaks identified from the second single-subarray angle spectrum 902b appear at phase values *ϕ = ϕ*_{1*b*} and *ϕ =* ϕ₂*_{b}.*

If multiple single-subarray angle spectra have been computed, the baseline peak may be identified while further considering information from a second single-subarray angle spectrum, e.g., by taking the average $\frac{1}{2} \left({ϕ}_{1 a}+{ϕ}_{1 b}\right)$ of the respective phase values or their median, or by confirming that there is a peak in the second single-subarray angle spectrum for this phase value too. Further still, data from the second single-subarray angle spectrum could be employed to construct a covariance matrix for use in a high-resolution spectral estimation algorithm.

In a fourth step 704, it is assessed whether a peak in the full-array angle spectrum is co-located with a corresponding baseline peak in the single-subarray angle spectrum (or one of the single-subarray angle spectra, as the case may be) computed in step 703. Provision is made that the angle spectra are computed from measurements, which have an inherent inaccuracy (tolerance). As such, since an exact co-location can usually not be expected, step 704 is an approximate assessment. With reference to the example angle spectra plotted in figure 9, it may be considered (with due account of the measuring inaccuracy) that:
- The left-hand baseline peak at *ϕ* = *ϕ*_{1*a*} in the first single-subarray angle spectrum 902a is co-located with the left-hand peak at *ϕ* = *ϕ*_{1*d*} in the direct-reflection full-array angle spectrum 901d.
- The left-hand baseline peak at *ϕ* = *ϕ*_{1*b*} in the second single-subarray angle spectrum 902b is co-located with the left-hand peak at *ϕ* = *ϕ*_{1*d*} in the direct-reflection full-array angle spectrum 901d.
- The left-hand baseline peak at *ϕ* = *ϕ*_{1*a*} in the first single-subarray angle spectrum 902a is not co-located with the left-hand peak at *ϕ* = *ϕ*_{1*mp*} in the multipath full-array angle spectrum 901mp. More precisely, the separation |*ϕ*_{1*a*} - *ϕ*_{1*mp*}| is significantly greater than the separation |*ϕ*_{1*a*} - *ϕ*_{1*d*}|, and thus cannot be explained by a measuring inaccuracy.
- The left-hand baseline peak at *ϕ* = *ϕ*_{1*b*} in the second single-subarray angle spectrum 902b is not co-located with the left-hand peak at *ϕ* = *ϕ*_{1*mp*} in the multipath full-array angle spectrum 901mp.

The corresponding statements are valid for the respective right-hand peaks located at phase values *ϕ*₂*ₐ, ϕ*₂*_{b}, ϕ*_{2*d*}, *ϕ*₂*ₘₚ.* It is recalled that both the single-subarray angle spectra and the full-array angle spectrum are computed from the same range-Doppler bin.

In embodiments of the method 700, the fourth step 704 can be implemented in a variety of ways, to allow direct and indirect assessment of co-location.

In one embodiment, the known location of a peak in one angle spectrum is used to deduce an expected location of the corresponding peak in the other angle spectrum (step 704.1), and non-noise signal content is then detected at the expected location (step 704.2).

Step 704.1 has two alternatives: it may include deducing an expected location of the peak in the full-array angle spectrum from the baseline peak's location in the single-subarray angle spectrum, or it may include deducing the expected location of the baseline peak in the single-subarray angle spectrum from the location of the peak in the full-array angle spectrum. The former option of deducing an expected location of the peak in the full-array angle spectrum from the baseline peak's location in the single-subarray angle spectrum may be preferable, knowing that the single-subarray angle spectrum does not suffer from discontinuities between subarrays and is therefore more stable. The latter option may be considered preferable since the full-array angle spectrum generally has higher angular resolution. In normal circumstances, where co-location is understood as equality of the full-array angle spectrum (FAAS) phase and the single-subarray angle spectrum (SSAS) phase, ${ϕ}_{1 , FAAS} = {ϕ}_{1 , SSAS}$ the peak is expected to be located at a phase value equal to the known phase value. The criterion *ϕ*₁*_{,FAAS} = ϕ*_{1,*SSAS*} may need to be adjusted in setups where there is a known systematic error, poor calibration, inaccuracy or other factors that could shift the peak away from its ideal expected location or blur it. In the example of figure 9, if the approach where the expected location of the peak in the full-array angle spectrum is deduced from the baseline peak's location in the single-subarray angle spectrum is followed, then the baseline peak of the first single-subarray angle spectrum 902a located at *ϕ* = *ϕ*_{1*a*} would give rise to an expectation of finding the corresponding peak in the full-array angle spectrum at *ϕ* ≈ *ϕ*_{1*a*}. It is seen in figure 9 that this is fulfilled for the left-hand peak in the direct-reflection full-array angle spectrum 901d (i.e., ϕ_{1*a*} ≈ *ϕ*_{1*d*}) but not for the left-hand peak in the multipath full-array angle spectrum 901mp.

Step 704.2 may include a comparison with a threshold. The threshold may be a preconfigured constant (e.g., determined by a system owner or according to a factory setting) or may be computed as a function of the noise floor of the virtual array signal (e.g., based on measurements on the virtual array signal, or taken from a specification for the TDM MIMO radar equipment which provided the virtual array signal).

The comparison in step 704.2 may be a direct comparison of the angle spectrum signal with a threshold representing a measured or estimated noise floor of the angle spectrum signal. The comparison in step 704.2 may be a direct comparison of the angle spectrum signal after noise removal with a preconfigured threshold. Further, the comparison may be a comparison of a statistic computed from the full-array angle spectrum with the threshold. This statistic may be a test statistic suitable for statistical hypothesis testing. The statistic may for example be an estimator of a similarity, such as an estimator of a cosine square similarity of the full-array angle spectrum and the virtual array's steering vector. The virtual array's steering vector can be calculated according to (9) using knowledge of the spacings *dₜ, dᵣ* and the AoA.

In particular, one may use an adaptive coherence estimator (ACE) as described in the research paper
L. L. Scharf and L. T. McWhorter, "Adaptive matched subspace detectors and adaptive coherence estimators," Conference Record of the 30th Asilomar Conference on Signals, Systems and Computers, Pacific Grove, CA, USA, 1996, pp. 1114-1117 vol.2, doi: 10.1109/ACSSC.1996.599116.
For the purpose of step 704.2, an ACE of the virtual array's steering vector for an identified angle of a baseline peak is to be used, which may be written: $L \left(x, \hat{R}, \hat{ϕ}\right) = \frac{{\left|{\left({a}_{t}\left(\hat{ϕ}\right)⊗{a}_{r}\left(\hat{ϕ}\right)\right)}^{H}{\hat{R}}^{- 1}x\right|}^{2}}{\left({\left({a}_{t}\left(\hat{ϕ}\right)⊗{a}_{r}\left(\hat{ϕ}\right)\right)}^{H}{\hat{R}}^{- 1}\left({a}_{t}\left(\hat{ϕ}\right)⊗{a}_{r}\left(\hat{ϕ}\right)\right)\right) \left({x}^{H}{\hat{R}}^{- 1}x\right)}$ where x is the full-array angle spectrum signal, H denotes Hermitian conjugate, and **R̂** = *E*[**xx***^{H}*] is the estimated covariance matrix. If the baseline peak is identified in the single-subarray angle spectrum at an AoA of *θ*₁, then *L*(***x**,* **R̂**, *ϕ̂*) is evaluated with $\hat{ϕ} = {\hat{ϕ}}_{1} = \frac{2 π {sinθ}_{1}}{λ} .$

In the special case where **R̂** = *I*, equation (15) defines an ACE for white noise (ACE-WN), which is particularly economical to evaluate.

ACEs are inherently normalized. They take values in the range [0,1] whatever noise level (e.g., SNR value) the signal x has. The hypothesis test for assessing the co-location property may thus use a constant, preconfigured threshold, such as 0.8, 0.9, 0.95 or another value that corresponds to a desired confidence level.

To assess the co-location property of two peaks, one may evaluate *L*(**x***,* **R̂**, *ϕ*₁) and *L*(**x***,* **R̂**, *ϕ̂*₂) and compare them with the threshold. Alternatively, the smaller of the two values, ${min}_{j = 1 , 2} L \left(x, \hat{R}, {\hat{ϕ}}_{j}\right)$**,** is compared with the threshold. This alternative means that the presence of multipath artefact is concluded if the two ACEs yield contradicting results, i.e., one is above and one is below the threshold.

A further way of carrying out step 704 is to use the baseline peaks in the single-subarray angle spectrum as a reference and to localize the peak in the full-array angle spectrum based on a correspondence criterion with respect to the corresponding baseline peak (step 704.3). The respective locations of the baseline peak in the single-subarray angle spectrum and the thus localized peak in the full-array angle spectrum are then compared (step 704.4), so that the co-location property can be assessed. To perform the comparison in step 704.4, a simple test to use is whether the locations (in terms of phase) differ by more than a threshold. A correspondence criterion in this sense may include one or more of:
i) The peak and the corresponding baseline peak have an equal relative magnitude in the angle spectrum. In particular, the peak and the corresponding baseline peak are two largest peaks in their respective angle spectra.
ii) The peak and the corresponding baseline peak are similarly situated relative to adjacent peaks in the angle spectrum. E.g., if the single-subarray angle spectrum has one larger peak surrounded by two smaller peaks (adjacent peaks), it may be expected that these appear in the same sequence and with the same approximate magnitude ratios in the full-array angle spectrum. The right-hand smaller peak in the single-subarray angle spectrum thus corresponds to the right-hand smaller peak in the full-array angle spectrum.
iii) The peak and the corresponding baseline peak are similarly situated relative to an overall waveform of the angle spectrum.

If according to the assessment in step 704, the peak in the full-array angle spectrum and the baseline peak in the single-subarray angle spectrum are co-located, it is concluded in a step 705 that the peak in the full-array angle spectrum represents a direct reflection in the scene. Otherwise, if step 704 provides that the peak in the full-array angle spectrum and the baseline peak in the single-subarray angle spectrum are not co-located, it is concluded in a step 706 that the peak in the full-array angle spectrum represents a multipath artefact.

In a further development of the method 700, the assessment in step 704 is applied to two peaks. Thus, it is assessed whether two peaks in the full-array angle spectrum are co-located with two corresponding baseline peaks in the computed single-subarray angle spectrum. Depending on the outcome, it is concluded in step 705 that the two peaks in the full-array angle spectrum represent two direct reflections in the scene if the peaks and the baseline peaks are co-located. Otherwise, it is concluded in step 706 that the two peaks in the full-array angle spectrum represent a first-order multipath artefact if the peaks and the baseline peaks are not co-located.

The two peaks can be two arbitrarily selected peaks in the full-array angle spectrum on which a user wishes to perform a multipath test. In particular, the two peaks in the full-array angle spectrum have substantially equal magnitude. Alternatively or additionally, the two peaks may be the two leading peaks in the full-array angle spectrum. Further, heuristic tests for assessing whether two peaks are reflections off the same (real or apparent) radar target are known in the art; the two peaks may be selected from a group of peaks that pass a test of this type. In each of these cases, the user may have reason to suspect that the peaks represent first-order multipath artefacts. The two peaks do not necessarily fulfil a correspondence criterion.

Table 1 summarizes rules which can be used for making conclusions on the basis of an attempt to detect non-signal noise content at an expected location of one or two peaks. A positive outcome means that non-signal noise content (at a nonzero level or above a nonzero threshold) has been detected at the expected location. Detections are performed on two peaks in the present further development of the method 700.

| **Table 1: Example conclusions concerning multipath** | | | | |
|---|---|---|---|---|
| | **Detection for first peak** | | | |
| **Detection for second peak** | | *Positive outcome* | *Negative outcome* | *Not performed* |
| | *Positive outcome* | Direct reflection | Unreliable | (Likely) direct reflection |
| | *Negative outcome* | Unreliable | Multipath | (Likely) multipath |
| | *Not performed* | (Likely) direct reflection | (Likely) multipath | Unreliable |

As seen in Table 1, the "likely" conclusions can be drawn based on just one detection, so that the detection for the second peak can optionally be omitted if that level or reliability is sufficient.

In a variation of the rules according to Table 1, there is an asymmetry to the effect that a negative outcome shall be given greater weight than a positive, e.g., the presence of a multipath artefact is concluded as soon as one detection is negative, but the presence of a direct reflection is not concluded unless both detections are positive.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A method (700) of resolving a first-order multipath ambiguity for a virtual array of a time-division multiplexing, TDM, multiple-input multiple-output, MIMO, frequency-modulated continuous-wave, FMCW, radar, wherein:
the TDM MIMO FMCW radar comprises at least one row of physical receivers (20) with a first spacing (*dᵣ*) in a first direction, and further comprises a plurality of physical transmitters (10) arranged with a second spacing (*dₜ*) in said first direction, and
the virtual array comprises a plurality of subarrays (40), each subarray generated by a combination of the row of physical receivers and one of the physical transmitters,
the method comprising:
obtaining (701) a virtual array signal (z) of a range-Doppler bin relating to a scene, each element of the virtual array signal corresponding to one virtual antenna element of the virtual array;
computing (702) a full-array angle spectrum (901) based on all elements of the virtual array signal;
computing (703) at least one single-subarray angle spectrum (902) based on the virtual array signal restricted to one of the subarrays;
assessing (704) whether a peak in the full-array angle spectrum is co-located with a corresponding baseline peak in a computed single-subarray angle spectrum;
if the peak and the baseline peak are co-located, concluding (705) that the peak in the full-array angle spectrum represents a direct reflection in the scene; and,
if the peak and the baseline peak are not co-located, concluding (706) that the peak in the full-array angle spectrum represents a first-order multipath artefact.

2. The method (700) of claim 1, wherein assessing (704) whether the peak and the baseline peak are co-located comprises:
deducing (704.1a) an expected location of the peak in the full-array angle spectrum from the baseline peak's location in the single-subarray angle spectrum, or deducing (704.1b) the baseline peak's expected location from the location of the peak in the full-array angle spectrum; and
detecting (704.2) non-noise signal content at the expected location.

3. The method (700) of claim 2, wherein detecting (704.2) non-noise signal content includes a comparison with a threshold.

4. The method (700) of claim 3, wherein the threshold is a preconfigured constant.

5. The method (700) of claim 3, wherein the threshold corresponds to a noise floor of the virtual array signal.

6. The method (700) of claim 3, wherein:
computing (703) at least one single-subarray angle spectrum includes identifying (703.1) an angle of the baseline peak; and
the non-noise signal content is detected (704.1) by estimating a similarity of the full-array angle spectrum and the virtual array's steering vector for the identified angle.

7. The method (700) of claim 6, wherein said similarity is estimated using an adaptive coherence estimator, ACE, of the virtual array's steering vector for the identified angle.

8. The method (700) of claim 1, wherein assessing (704) whether the peak and the corresponding peak are co-located comprises:
localizing (704.3) the peak in the full-array angle spectrum based on a correspondence criterion with respect to the corresponding baseline peak; and
comparing (704.4) the location of the baseline peak and the thus localized peak.

9. The method (700) of claim 8, wherein the correspondence criterion includes one or more of:
having an equal relative magnitude in the angle spectrum,
being similarly situated relative to adjacent peaks in the angle spectrum,
being similarly situated relative to an overall waveform of the angle spectrum.

10. The method (700) of any of the preceding claims, wherein:
at least two single-subarray angle spectra are computed (703), each based on the virtual array signal restricted to a different one of the subarrays; and
the baseline peak is identified (703.1) in a first single-subarray angle spectrum while further considering a second single-subarray angle spectrum.

11. The method (700) of any of the preceding claims, wherein:
it is assessed (704) whether two peaks in the full-array angle spectrum are co-located with two corresponding baseline peaks in the computed single-subarray angle spectrum;
it is concluded (705) that the two peaks in the full-array angle spectrum represent two direct reflections in the scene if the peaks and the baseline peaks are co-located; and
it is concluded (706) that the two peaks in the full-array angle spectrum represent two direct reflections in the scene if the peaks and the baseline peaks are not co-located.

12. The method (700) of claim 11, wherein the two peaks in the full-array angle spectrum have substantially equal magnitude.

13. The method (700) of claim 11 or 12, wherein said two peaks are the two leading peaks in the full-array angle spectrum.

14. A signal processing device (800) for a time-division multiplexing, TDM, multiple-input multiple-output, MIMO, frequency-modulated continuous-wave, FMCW, radar, wherein:
the TDM MIMO FMCW radar comprises at least one row of physical receivers (20) with a first spacing (*dᵣ*) in a first direction, and further comprises a plurality of physical transmitters (10) arranged with a second spacing (*dₜ*) in said first direction, and
the virtual array comprises a plurality of subarrays (40), each subarray generated by a combination of the row of physical receivers and one of the physical transmitters,
the signal processing device comprising processing circuitry (810) configured to resolve, in a virtual array signal comprising at least one range-Doppler bin, a first-order multipath ambiguity for a virtual array of the TDM MIMO FMCW radar by performing the method (700) of any of the preceding clams.

15. A computer program (814) comprising instructions which, when the program is executed by a computer, cause the computer to carry out the method (700) of any of claims 1 to 13.

## Amended claims

### Amended claims in accordance with Rule 137(2) EPC.

1. A computer-implemented method (700) of resolving a first-order multipath ambiguity for a virtual array of a time-division multiplexing, TDM, multiple-input multiple-output, MIMO, frequency-modulated continuous-wave, FMCW, radar, wherein:
the TDM MIMO FMCW radar comprises at least one row of physical receivers (20) with a first spacing (*dᵣ*) in a first direction, and further comprises a plurality of physical transmitters (10) arranged with a second spacing (*dₜ*) in said first direction, and
the virtual array comprises a plurality of subarrays (40), each subarray generated by a combination of the row of physical receivers and one of the physical transmitters,
the method comprising:
obtaining (701) a virtual array signal (z) of a range-Doppler bin relating to a scene, each element of the virtual array signal corresponding to one virtual antenna element of the virtual array; and
computing (702) a full-array angle spectrum (901) based on all elements of the virtual array signal,
the method **characterized by** further comprising:
computing (703) at least one single-subarray angle spectrum (902) based on the virtual array signal restricted to one of the subarrays;
assessing (704) whether a peak in the full-array angle spectrum is co-located with a corresponding baseline peak in a computed single-subarray angle spectrum;
if the peak and the baseline peak are co-located, concluding (705) that the peak in the full-array angle spectrum represents a direct reflection in the scene; and,
if the peak and the baseline peak are not co-located, concluding (706) that the peak in the full-array angle spectrum represents a first-order multipath artefact.

2. The method (700) of claim 1, wherein assessing (704) whether the peak and the baseline peak are co-located comprises:
deducing (704.1a) an expected location of the peak in the full-array angle spectrum from the baseline peak's location in the single-subarray angle spectrum, or deducing (704.1b) the baseline peak's expected location from the location of the peak in the full-array angle spectrum; and
detecting (704.2) non-noise signal content at the expected location.

3. The method (700) of claim 2, wherein detecting (704.2) non-noise signal content includes a comparison with a threshold.

4. The method (700) of claim 3, wherein the threshold is a preconfigured constant.

5. The method (700) of claim 3, wherein the threshold corresponds to a noise floor of the virtual array signal.

6. The method (700) of claim 3, wherein:
computing (703) at least one single-subarray angle spectrum includes identifying (703.1) an angle of the baseline peak; and
the non-noise signal content is detected (704.1) by estimating a similarity of the full-array angle spectrum and the virtual array's steering vector for the identified angle.

7. The method (700) of claim 6, wherein said similarity is estimated using an adaptive coherence estimator, ACE, of the virtual array's steering vector for the identified angle.

8. The method (700) of claim 1, wherein assessing (704) whether the peak and the corresponding peak are co-located comprises:
localizing (704.3) the peak in the full-array angle spectrum based on a correspondence criterion with respect to the corresponding baseline peak; and
comparing (704.4) the location of the baseline peak and the thus localized peak.

9. The method (700) of claim 8, wherein the correspondence criterion includes one or more of:
having an equal relative magnitude in the angle spectrum,
being similarly situated relative to adjacent peaks in the angle spectrum,
being similarly situated relative to an overall waveform of the angle spectrum.

10. The method (700) of any of the preceding claims, wherein:
at least two single-subarray angle spectra are computed (703), each based on the virtual array signal restricted to a different one of the subarrays; and
the baseline peak is identified (703.1) in a first single-subarray angle spectrum while further considering a second single-subarray angle spectrum.

11. The method (700) of any of the preceding claims, wherein:
it is assessed (704) whether two peaks in the full-array angle spectrum are co-located with two corresponding baseline peaks in the computed single-subarray angle spectrum;
it is concluded (705) that the two peaks in the full-array angle spectrum represent two direct reflections in the scene if the peaks and the baseline peaks are co-located; and
it is concluded (706) that the two peaks in the full-array angle spectrum represent a first-order multipath artefact if the peaks and the baseline peaks are not co-located.

12. The method (700) of claim 11, wherein the two peaks in the full-array angle spectrum have substantially equal magnitude.

13. The method (700) of claim 11 or 12, wherein said two peaks are the two leading peaks in the full-array angle spectrum.

14. A signal processing device (800) for a time-division multiplexing, TDM, multiple-input multiple-output, MIMO, frequency-modulated continuous-wave, FMCW, radar, wherein:
the TDM MIMO FMCW radar comprises at least one row of physical receivers (20) with a first spacing (*dᵣ*) in a first direction, and further comprises a plurality of physical transmitters (10) arranged with a second spacing (*dₜ*) in said first direction, and
the virtual array comprises a plurality of subarrays (40), each subarray generated by a combination of the row of physical receivers and one of the physical transmitters,
the signal processing device comprising processing circuitry (810) configured to resolve, in a virtual array signal comprising at least one range-Doppler bin, a first-order multipath ambiguity for a virtual array of the TDM MIMO FMCW radar by performing the method (700) of any of the preceding claims.

15. A computer program (814) for resolving a first-order multipath ambiguity for a virtual array of a TDM MIMO FMCW radar, the program comprising instructions which, when the program is executed by a computer taking as input a virtual array signal from the TDM MIMO FMCW radar, cause the computer to carry out the method (700) of any of claims 1 to 13.
